# EUROPEAN PATENT APPLICATION

(11) **EP 4 791 009 A1**
(43) Date of publication of application: **12.08.2026**
(21) Application number: 24877678.3
(22) Date of filing: 02.10.2024
(51) Int. Cl.: H04N 21/431, H04N 21/2187, H04L 65/611

(54) **METHOD AND APPARATUS FOR LIVE STREAMING, DEVICE AND STORAGE MEDIUM**

(30) Priority: 08.10.2023 CN 202311295867
(71) Applicant: Lemon Inc., Grand Cayman, KY1-1205 (KY)
(72) Inventor: HUANG, Jiafeng, Beijing 100028 (CN); LI, Ronghua, Beijing 100028 (CN); DONG, Shangyong, Beijing 100028 (CN); ZHOU, Si, Beijing 100028 (CN); KANG, Zhibo, Beijing 100028 (CN); DING, Yitong, Beijing 100028 (CN); LI, Jinxin, Beijing 100028 (CN); LI, Zhaoji, Beijing 100028 (CN); SUN, Li, Beijing 100028 (CN); WANG, Hui, Beijing 100028 (CN); ZHANG, Chao, Beijing 100028 (CN); WU, Guizhou, Beijing 100028 (CN); WANG, Zhen, Beijing 100028 (CN)
(74) Representative: Grünecker Patent- und Rechtsanwälte PartG mbB
(86) International application number: PCT/SG2024/050638
(87) International publication number: WO 2025/080203

(57) **Abstract**

Embodiments of the disclosure provide a method, an apparatus, a device, and a storage medium for live streaming. In the method, a live streaming configuration interface is presented at a first device for live streaming; establishing a connection between the first device and a second device via the live streaming configuration interface. An image layout mode is determined based on input information obtained via the live streaming configuration interface, the layout mode indicating a position of an image captured by the second device in a live streaming image. A set of live streaming images is caused to be generated based on the image layout mode. Therefore, a streamer can be enabled to collect a screen image (for example, a real-time image of the stream) by using the second device while using the first device for live streaming, such that the occlusion problem in the live streaming can be effectively solved, the live streaming experience can be improved.

## Description

This application claims the benefit of Chinese Patent Application No. 202311295867.X, entitled "METHOD, APPARATUS, DEVICE, AND STORAGE MEDIUM FOR LIVE STREAMING," filed Oct. 8, 2023, the entire content of which is incorporated herein by reference.

### FIELD

Example embodiments of the disclosure generally relate to the field of computers, and in particular, to methods, apparatuses, devices, and computer-readable storage medium for live streaming.

### BACKGROUND

With the development of computer technologies, more and more applications may provide live streaming functions. When using a mobile terminal for live streaming of a mobile game, presenting an image of streamer is a strong requirement of a plurality of streamer. However, when performing a live streaming of a mobile game, how to effectively present an image of a streamer is a focus concerned by people due to occlusion of a hand of an operator on the camera.

### SUMMARY

In a first aspect of the disclosure, a method for live streaming is provided. The method includes: presenting a live streaming configuration interface at a first device for live streaming; establishing a connection between the first device and the second device via the live streaming configuration interface; determining an image layout mode based on input information obtained via the live streaming configuration interface, the layout mode indicating a position of an image captured by the second device in a live streaming image; causing a set of live streaming images to be generated based on the image layout mode.

In a second aspect of the disclosure, a live streaming room interaction method is provided. The method includes establishing, at a second device for live streaming, a connection between a first device and the second device using a live streaming configuration interface presented by the first device; and providing an image preview interface by the second device, to display an image captured by the second device, the image being to be included in a live streaming image based on an image layout mode determined via the live streaming configuration interface, and the image layout mode indicating a position of the image captured by the second device in the live streaming image.

In a third aspect of the disclosure, an apparatus for live streaming is provided. The apparatus includes a first interface display module configured to present a live streaming configuration interface at a first device for live streaming; a first device connection module configured to establish a connection between the first device and a second device via the live streaming configuration interface; a first layout determination module configured to determine an image layout mode based on input information obtained via the live streaming configuration interface, the layout mode indicating a position of an image captured by the second device in a live streaming image; and a first image generation module configured to cause a set of live streaming images to be generated based on the image layout mode.

In a fourth aspect of the disclosure, an apparatus for live streaming room interaction is provided. The apparatus includes a third presentation module configured to present a first media content at a second terminal in a second live streaming interface of the live streaming room, the first media content being generated based on at least first description information input by a first user of the live streaming room via a first terminal; a second acquisition module, configured to obtain second description information input by a second user of the live streaming room via a second live streaming interface; and a fourth presentation module, configured to present a second media content in the second live streaming interface, the second media content being generated based on at least the first description information and the second description information.

In a fifth aspect of the disclosure, an apparatus for live streaming is provided. The apparatus includes: a second device connection module configured to establish a connection between the first device and the second device at a second device for live streaming by using a live streaming configuration interface presented by a first device; and a second interface display module configured to provide an image preview interface by the second device to display an image captured by the second device, the image being to be included in a live streaming image based on an image layout mode determined via the live streaming configuration interface, and the layout pattern indicating a position of the image captured by the second device in the livestreaming image.

In a sixth aspect of the disclosure, an electronic device is provided. The device includes at least one processing unit; and at least one memory coupled to the at least one processing unit and storing instructions for execution by the at least one processing unit. The instructions, when executed by the at least one processing unit, cause the device to perform the method of the first aspect and / or the second aspect.

In a seventh aspect of the disclosure, a computer-readable storage medium is provided. The computer-readable storage medium stores a computer program, and the computer program is executable by the processor to implement the method according to the first aspect and / or the second aspect.

It is to be understood that the content described in this content section is not intended to limit the key features or important features of the embodiments of the disclosure, nor is it intended to limit the scope of the disclosure. Other features of the disclosure will become readily understood from the following description.

### BRIEF DESCRIPTION OF DRAWINGS

The above and other features, advantages, and aspects of various embodiments of the disclosure will become more apparent from the following detailed description taken in conjunction with the accompanying drawings. In the drawings, the same or similar reference numbers refer to the same or similar elements, wherein:
FIG. 1 illustrates a schematic diagram of an example environment in which embodiments of the disclosure can be implemented;
FIGS. 2A-2F illustrate example interfaces according to some embodiments of the disclosure;
FIGS. 3A-3B illustrate example interfaces according to some other embodiments of the disclosure;
FIG. 4 illustrates an example live streaming interface according to some embodiments of the disclosure;
FIG. 5 illustrates a flowchart of an example live streaming procedure according to some embodiments of the disclosure;
FIG. 6 shows a flowchart of an example live streaming procedure according to some other embodiments of the disclosure;
FIG. 7 illustrates a block diagram of a live streaming apparatus according to some embodiments of the disclosure;
FIG. 8 illustrates a block diagram of a live streaming apparatus according to some other embodiments of the disclosure; and
FIG. 9 illustrates a block diagram of an electronic device capable of implementing various embodiments of the disclosure.

### DETAILED DESCRIPTION

It can be understood that, before the technical solutions disclosed in the embodiments of the disclosure are used, the types, the usage scope, the usage scenario and the like of personal information related to the disclosure should be notified to the user in an appropriate manner according to the relevant laws and regulations, and the authorization thereof should be obtained from the user.

For example, in response to receiving an active request from a user, prompt information is sent to the user to explicitly prompt the user that the requested operation will need to obtain and use personal information of the user, so that the user may autonomously select whether to provide personal information to software or hardware, such as an electronic device, an application, a server or a storage medium, executing the operation of the technical solution of the disclosure according to the prompt information.

As an optional but non-limiting implementation, in response to receiving an active request of the user, a manner of sending prompt information to the user may be, for example, a pop-up window, and the prompt information may be presented in a text manner in the pop-up window. In addition, the pop-up window may further carry a selection control for the user to select "agree" or "not agree" to provide personal information to the electronic device.

It may be understood that the foregoing processes of notification and obtaining a user authorization are merely illustrative, and do not constitute a limitation on implementations of the disclosure, and other manners of meeting related laws and regulations may also be applied to implementations of the disclosure.

It may be understood that data involved in the technical solution (including but not limited to the data itself, obtaining or usage of the data) should comply with the requirements of corresponding laws and regulations and related provisions.

The term "in response to" as used herein means a state in which a respective event occurs or condition is satisfied. It will be appreciated that the occasion of execution of a subsequent action performed in response to the event or a condition is not necessarily strongly correlated with the time at which the event occurs or a condition holds true. For example, in some cases, a subsequent action may be performed immediately when an event occurs or a condition holds true; while in other cases, a subsequent action may be performed after a period of time as an event occurs or a condition holds true.

Embodiments of the disclosure will be described in more detail below with reference to the accompanying drawings. While certain embodiments of the disclosure are shown in the accompanying drawings, it is to be understood that the disclosure may be implemented in various forms, and should not be construed as being limited to the embodiments set forth herein, but rather, these embodiments are provided for a more thorough and complete understanding of the disclosure. It is to be understood that the drawings and embodiments of the disclosure are for illustrative purposes only and are not intended to limit the scope of the disclosure.

It should be noted that the title of any section / subsection provided herein is not limiting. Various embodiments are described throughout and any type of embodiments may be included in any section / subsection. Furthermore, the embodiments described in any section / subsection may be combined in any manner with the same section / subsection and / or any other embodiment described in different sections / subsection.

In the descriptions of the embodiments of the disclosure, the terms "including" and the like should be understood as open-ended inclusion, i.e., "including but not limited to". The term "based on" should be understood as "based at least in part on". The term "one embodiment" or "the embodiment" should be understood as "at least one embodiment". The term "some embodiments" should be understood as "at least some embodiments". Other explicit and implicit definitions may also be included below. The terms "first," "second," and the like may refer to different or identical objects. Other explicit and implicit definitions may also be included below.

Existing face-showing technology for live streaming of a mobile game may include, for example, performing screen recoding live streaming by using a mobile phone while turning on a camera of a mobile phone for face-showing shooting. Such operations may make a hand of a streamer often block the camera, thereby affecting image acquisition. Meanwhile, due to a gesture problem in using the mobile phone, an image angle may be low, thereby affecting an experience of the viewer. For another example, a mobile phone is taken to perform live streaming, live streaming content is a game image from another mobile phone, and then the face may be shown in the live streaming image through a mirror. Disadvantages of such operations may be that the quality of the game image shot by the live streaming of the show field may be relatively poor, and meanwhile, the hand operation of the streamer often blocks the game image, such that the experience of viewer is poor. Additionally, the state of the camera may not be controlled in real time, thereby causing inconvenience to turning off the camera.

In view of this, embodiments of the disclosure provide a solution for live streaming. According to the solution, a live streaming configuration interface may be presented at a first device for live streaming. Further, a connection between the first device and the second device may be established via the live streaming configuration interface.

Further, an image layout mode may be determined based on input information obtained via the live streaming configuration interface, the layout mode indicating a position of an image captured by the second device in the live streaming image. Accordingly, a set of live streaming images may be generated based on the image layout mode.

Therefore, the streamer may be enabled to capture the screen image (for example, a real-time image of a streamer) by using the second device while using the first device for live streaming, such that the occlusion problem in the live streaming can be effectively solved, improving live streaming experience.

Example embodiments of the disclosure are described below with reference to the accompanying drawings.

### Example Environment

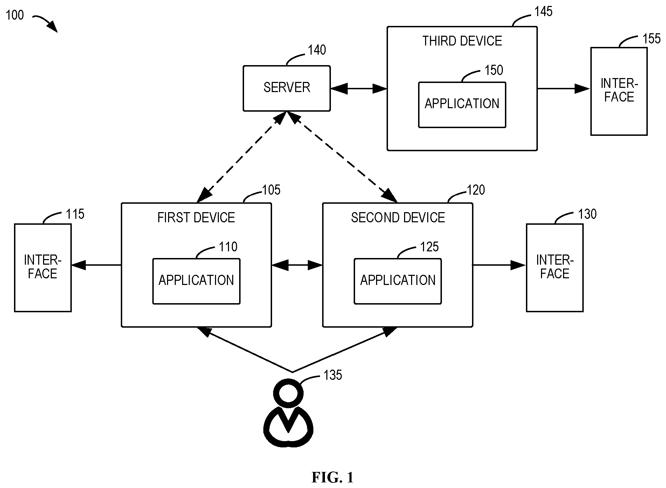

FIG. 1 illustrates a schematic diagram of an example environment 100 in which embodiments of the disclosure can be implemented. As shown in FIG. 1, the environment 100 may include a first device 105 and a second device 120.

The first device 105 and the second device 120 may be associated with the same user 135. Such a user 135 may be, for example, a live streaming party (also referred to as a streamer) in a live streaming.

As shown in FIG. 1, an application 110 and an application 125 may be respectively installed on the first device 105 and the second device 120. Such applications 110 and 125 may provide live streaming services to the user 135, for example, initiating the live streaming.

Accordingly, the first device 105 and the second device 120 may present respective interfaces 115 and interfaces 130, which may, for example, provide an interface for configuring before the live streaming begins.

Further, during a live streaming, the first device 105 and / or the second device 120 may further communicate with a server 140 through a network, to supply a live streaming service. The server 140 may provide functions such as management and maintenance of the live streaming.

In addition, the server 140 may also be communicatively connected to a third device 145, for example. Such a third device 145 may, for example, be associated with other users to support such users obtaining live streaming content from the user 135.

For example, an application 150 may be installed in the third device 145, and such the application 150 may be, for example, an application for providing the live streaming service. Accordingly, the third device 145 may provide live streaming content to the user through the interface 155.

The first device 105, the second device 120, and the third device 145 may be any type of mobile terminal, fixed terminal, or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio / video player, a digital camera / camcorder, a television receiver, a radio broadcast receiver, an electronic book device, a gaming device, or any combination of the foregoing, including accessories and peripherals of these devices, or any combination thereof. In some embodiments, the first device 105, the second device 120, and the third device 145 may also support any type of interface for a user (such as a "wearable" circuit, etc. ). The server 140 may be various types of computing systems / servers capable of providing computing power, including, but not limited to, mainframes, edge computing nodes, computing devices in a cloud environment, and the like.

It is to be understood that the structures and functions of the various elements in the environment 100 are described for example purposes only and do not suggest any limitation to the scope of the disclosure.

Various example implementations of the disclosure will be described in detail below.

### Example Interfaces of First Device

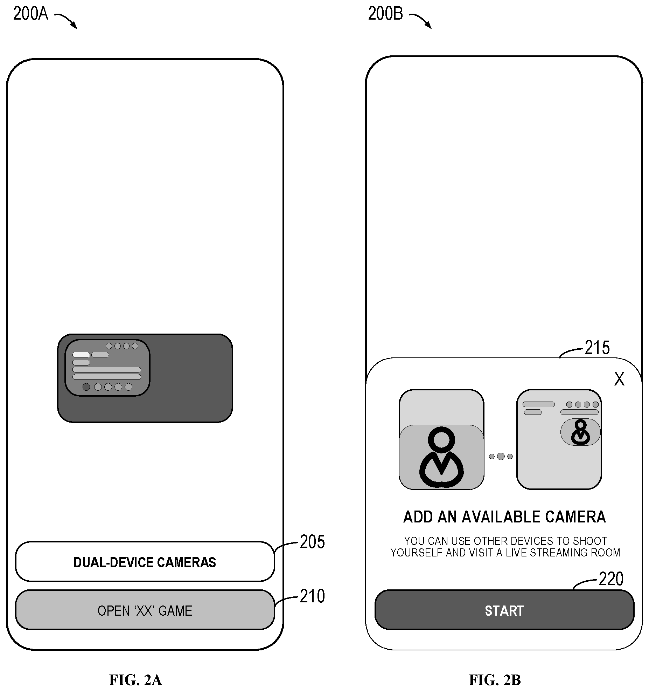

An example interface at the first device 105 will be described below in connection with FIGS. 2A-2F. As shown in FIG. 2A, after receiving a live streaming request of the user 135, the first device 105 may provide an interface 200A.

In the interface 200A, the first device 105 may, for example, provide a target mode 205 corresponding to multi-device live streaming, and an entry 210 for opening a local or cloud application to start the live streaming.

If the user 135 selects the entry 210, the first device 105 may, for example, open a corresponding application, and take the image of the application as a live streaming image to perform the live streaming.

If the user 135 selects the target mode 205, the first device 105 may present an interface 200B as shown in FIG. 2B. The interface 200B may include, for example, a live configuration interface 215. The live streaming configuration interface 215 may include, for example, one or more windows, regions, or interfaces for setting the live streaming.

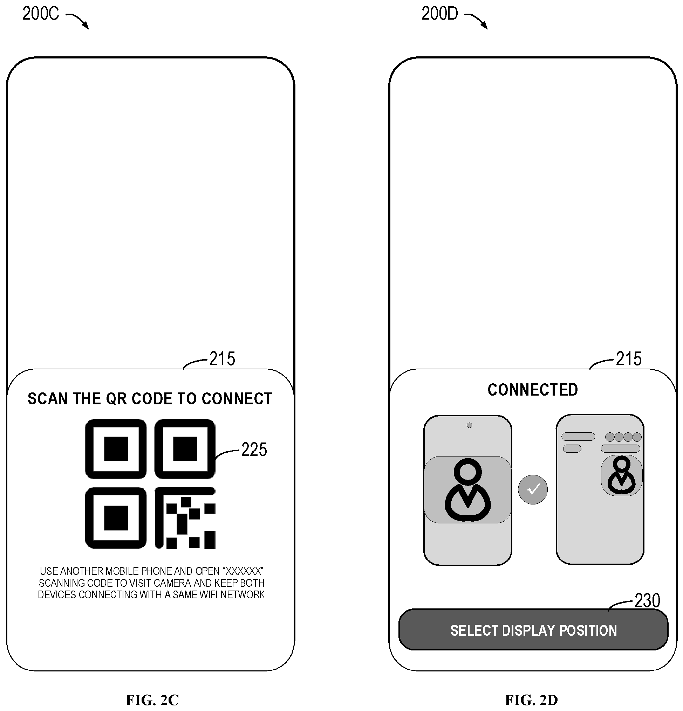

As shown in FIG. 2B, the live streaming configuration interface 215 may present prompt information regarding setting the second device 120 as a live streaming camera. Further, if the user 135 triggers the option 220, the first device 105 may display an interface 200C as shown in FIG. 2C.

As shown in FIG. 2C, the interface 200C may display connection information 225 in the live streaming configuration interface 215, which is used to indicate at least one connection parameter of the first device 105. For example, taking FIG. 2C as an example, the connection information 225 may be, for example, a barcode, which may be, for example, encoded with a connection parameter such as a network address and a connection port of the first device 105. Such barcodes may include suitable bar code forms such as one-dimensional bar codes, two-dimensional bar codes, and the like.

In some embodiments, the first device 105 may, for example, query a currently idle port and generate connection information 225 based on the idle port.

As will be described below, the second device 120 may, for example, obtain the connection information 225, and establish a connection between the first device 105 and the second device 120 based on the connection parameter indicated in the connection information 225.

In some embodiments, connection information 225 may be presented in other suitable formats, for example. Alternatively, such connection parameters may also be appropriately set according to different connection protocols. For example, in a case of connecting based on a Bluetooth protocol, the connection parameter may be a related parameter used to establish a Bluetooth connection.

It is to be understood that such a connection may be based on an appropriate network connection protocol, including but not limited to transmission control protocol (TCP), WebSocket, real-time communication (RTC), and the like.

Taking the TCP as an example, the first device 105 may select a local port that is not occupied, and may monitor the selected port. Subsequently, the first device 105 may generate a quick response (QR) code including the network address and the port information. Correspondingly, the second device 120 may scan the QR code, parsing the network address and the connection port, and initiate a connection to the specified IP and the port, thereby establishing the connection between the first device 105 and the second device 120.

Further, as shown in FIG. 2D, after a successful connection, the first device 105 may display an indication element (e.g., "connected") regarding to connection success, and may provide an entry 230 for configuring the image layout mode.

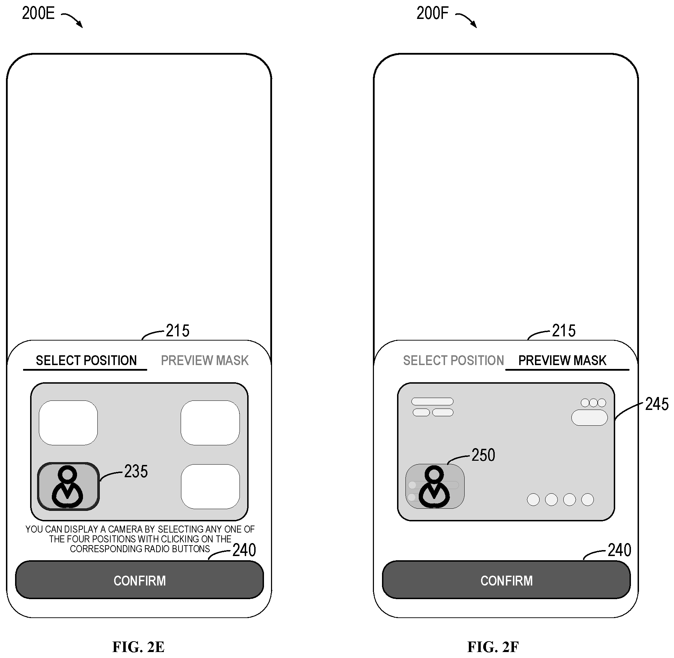

Upon receiving the selection of entry 230, the first device 105 may display interface 200E as shown in FIG. 2E. The user 135, for example, may configure the image layout mode via the interface 200E, which may indicate the position of the image captured by the second device 120 in the live streaming image.

As shown in FIG. 2E, the live configuration interface 215 may provide a plurality of candidate positions 235, where the plurality of candidate positions 235 may correspond to different image layout modes. For example, the upper left corner position may indicate that the image data captured by the second device 120 is to be placed in the upper left corner area of the live streaming image.

In some embodiments, the plurality of candidate positions 235 provided in the live configuration interface may be based on direction information associated with the live streaming image. For example, if the application to be live streaming is a landscape application, the first device 105 may provide a plurality of candidate positions 235 as shown in FIG. 2E. In contrast, if the application to be live streaming is a portrait application, the arrangement of the plurality of candidate positions 235 may be different, for example.

Therefore, the first device 105 may determine, based on the application to be live streaming, direction information associated with the to-be-presented live streaming image, for example, as a landscape screen or a portrait screen. Further, the first device 105 may provide a plurality of candidate positions 235 corresponding to the direction information.

Further, the user 135 may, for example, select a target position (for example, a position at a lower right corner) from the plurality of candidate positions.

Additionally, the user 135 may view the live streaming preview image by clicking the "preview mask", for example. As shown in FIG. 2F, the first device 105 may display a live streaming preview image 245 in the live preview page 215, which may at least indicate a position relationship between the image 250 captured by the second device 120 and at least one reference element in the live streaming image.

For example, taking FIG. 2F as an example, the live streaming preview interface 245 may mark a position of one or more live streaming control in the image, such that a position relationship between the image 250 from the second device 120 and such a live streaming control may be intuitively presented.

In some embodiments, the live streaming preview interface 245 may also provide, for example, an image preview of an application to be live streaming, to facilitate the user 135 to know a position relationship between the image 250 and the application image.

In some embodiments, the image 250 may be a real-time image from the second device 120, or may simply be any graphical element for characterizing the presence of an image in the area.

Therefore, the user can intuitively understand the expected layout of the image from the second device 120 in the live streaming image, thereby facilitating the user to better select the image layout mode.

In some embodiments, the first device 105 may also support, for example, the user 135 to configure the size of the image captured by the second device 120 in the live streaming image. For example, the first device 105 may also support the user to configure the image layout mode by dragging the position of the image element and / or adjusting the size of the image element.

Further, after the user 135 clicks the confirmation option 240, the first device 105 may determine a image layout mode for live streaming. For example, taking FIG. 2E as an example, the first device 105 may determine the corresponding image layout mode based on the candidate position 235 at which the lower left corner is selected by the user.

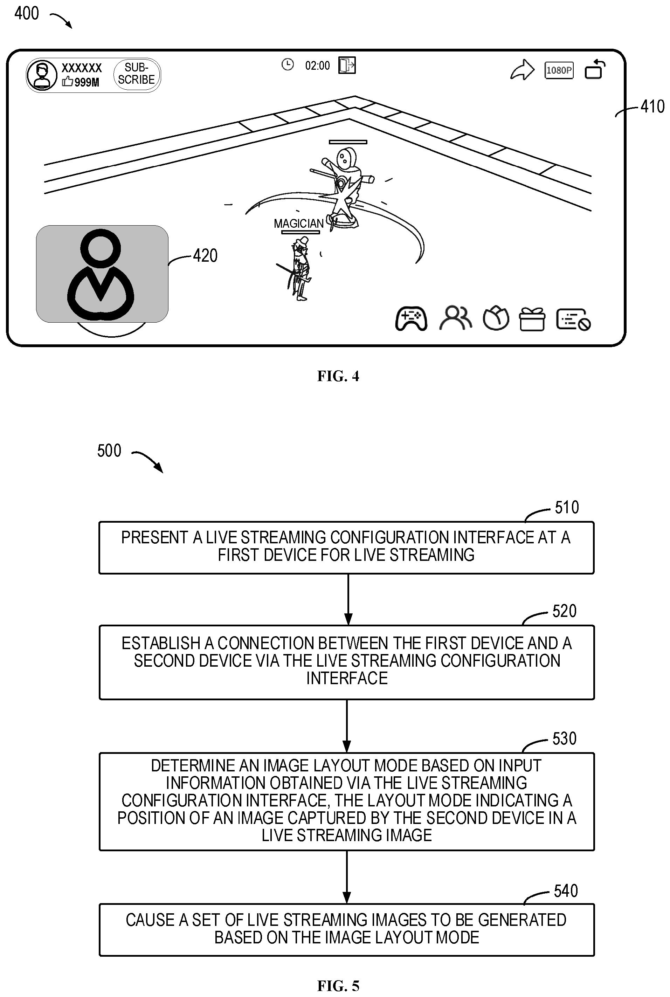

Further, the user 135 may, for example, enable the first device 105 to start the live streaming, such that the set of live streaming images is generated based on the image layout mode. A specific generation process of the live streaming image will be described in detail below with reference to FIG. 4.

### Example Interfaces for Second Device

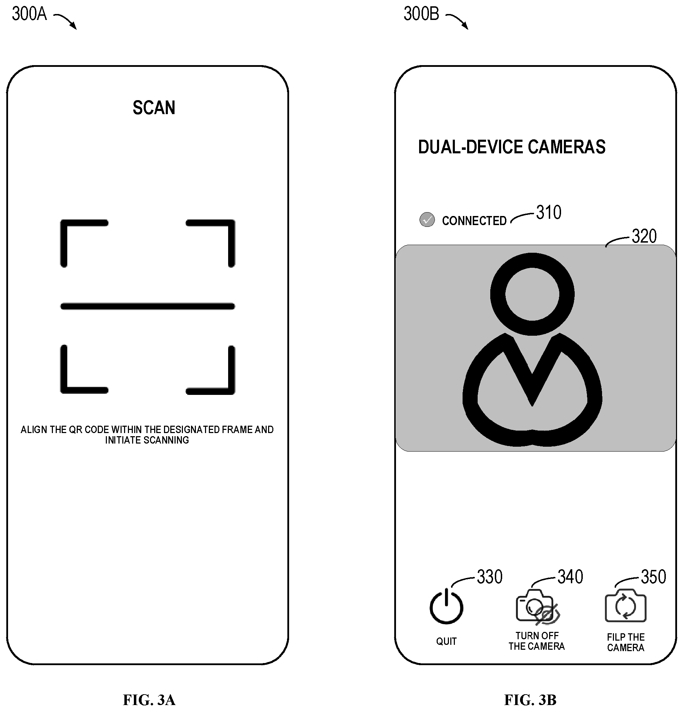

Example interfaces at the second device 120 will be described below in connection with FIGS. 3A-3B. As shown in FIG. 3A, if the user 135 selects to add the second device 120 as the shooting device for live streaming, the second device 120 may, for example, present an interface 300A shown in FIG. 3. It is to be understood that, for example, such the second device 120 is equipped with an image capturing device, for example, a camera.

As shown in FIG. 3A, the interface 300A may correspond to an acquisition interface of connection information. For example, the second device 120 may establish a connection with the first device 105, for example, by obtaining the connection information 225 provided by the first device 105. Taking the QR code as an example, the second device 120 may scan the QR code displayed at the first device 105 through the camera, thereby establishing the connection between the first device 105 and the second device 120.

It is to be understood that, in addition to scanning code, the second device 120 may establish a connection with the first device 105 based on other suitable manners. Such a manner may depend, for example, on the style of connection information 225 provided by the first device 105.

Further, after successfully establishing a connection with the first device 105, the second device 120 may display an image preview interface 300B as shown in FIG. 3B.

As shown in FIG. 3B, in the image preview interface 300B, the second device 120 may display state information, which may for example indicate a state 310 of the connection between the first device 105 and the second device 120.

Additionally, during the live streaming process, the state information may further indicate a state of the live streaming, for example, live streaming on-going, live streaming pausing, and the like. The state of the live streaming may also include a duration of the live streaming and the like.

Additionally, in the image preview interface 300B, the state information may also indicate a state of a camera of the second device, e.g., camera on or camera off.

In addition, as shown in FIG. 3B, in the image preview interface 300B, the second device 120 may further provide at least one control for controlling a camera of the second device 120, for example, a control 330, a control 340, and a control 350.

As an example, the control 330 may be configured to exit the live streaming, that is, stop using the second device as the live streaming device. With the user 135 triggering the control 330, the second device 120 will no longer capture image data. Alternatively, if the second device 120 exits the live streaming, the first device 105 may continue to remain in the live streaming state, for example.

As an example, the control 340 may be used to turn on or off the camera, for example. For example, the user 135 may turn the camera on or off by operating the control 340. For example, in a case where the camera is turned off, the camera of the second device 120 may cease capturing the image data, such that a black screen (or a prompt about turning off the camera) is presented in the corresponding area in the live streaming screen, or the live streaming screen ceases displaying the area.

As yet another example, the control 350 may be used to switch a camera in the second device 120 to capture image data, for example, switch from a front-facing camera to a rear-facing camera.

Therefore, the embodiment of the disclosure may support the user to set the other electronic device as the camera used for live streaming, such that the user may obtain the more expected real-time image by freely setting the placing position of the electronic device, such that the problem that the first device used for obtaining the image in the existing live streaming that may cause occlusion can be effectively avoided.

### Example Interfaces for Third Device

FIG. 4 illustrates a live streaming interface 400 according to some embodiments of the disclosure. The interface 400 may be provided, for example, by the third device 145.

As shown in FIG. 4, the live streaming interface 400 may be configured to display a set of live streaming images (or image streams) for displaying the live streaming. Such a live streaming image may be generated, for example, based on the image layout mode described above. That is, the position and / or size of the image 420 captured by the second device 120 in the live streaming image may be determined based on the image layout mode configured by the user 135.

Further, as shown in FIG. 4, such a live streaming image may be generated, for example, based on a first video stream provided by the first device 105 and a second video stream collected by the second device 120. For example, the first video stream may include, for example, screen recording data (such as screen recording data corresponding to a specific window (for example, a game window) of the first device) of the first device. The second video stream may include, for example, image data captured by a camera of the second device 120.

Taking FIG. 4 as an example, the first video stream may correspond to a game content portion 410 in the live streaming image, and the second video stream may correspond to an image 420.

In some embodiments, the set of live streaming images (also referred to as live streaming streams) may be generated by appropriate devices based on the first video stream and the second video stream.

As an example, the first device 105 may obtain a second video stream from the second device 120, and may merge the first video and the second video based on the image layout mode to generate a set of live streaming images.

That is, the first device 105 may obtain the second video stream from the second device 120 based on the connection with the second device 120, to achieve the merging of the first video stream and the second video stream, and may perform a stream ingestion of a merged live streaming stream. For example, the first device 105 may send the live streaming stream to a remote device, such as the server 140, for live streaming.

In some embodiments, the first device 105 and the second device 120 may also exchange state information. Specifically, the first device 105 may receive first state information from the second device 120, such that the first state information may indicate the state of the camera of the second device 120. Correspondingly, only when the camera of the second device 120 is turned on, the second device 120 sends the second video stream to the first device 105.

In contrast, if the camera of the second device 120 switches to turn off, the second device 120 ceases sending the second video stream to the first device 105, that is, the first device 105 ceases obtaining the second video stream from the second device. Further, the first device 105 may send the first video stream to the remote device as the live streaming image.

In addition, the first device 105 may further send second state information to the second device 120, to indicate whether the first device is in the live streaming. For example, the second device 120 may not send the second video stream to the first device 105 when the first device 105 is in the live streaming pausing state. Conversely, if the first device 105 is in live streaming, the second device 120 may send a second video stream to the first device 105.

In this way, the embodiments of the disclosure can implement the generation process of the live streaming image by the merging processing of the video.

### Example Processes

FIG. 5 illustrates a flowchart of an example live streaming process 500 according to some embodiments of the disclosure. Method 500 may be implemented by a first device (e.g., a first device 105 in FIG. 1). The method 500 is described below with reference to FIG. 1.

At block 510, a live streaming configuration interface is presented at a first device for live streaming.

At block 520, a connection between the first device and a second device is established via the live streaming configuration interface.

At block 530, an image layout mode is determined based on input information obtained via the live streaming configuration interface, the layout mode indicating a position of an image captured by the second device in a live streaming image.

At block 540, a set of live streaming images is caused to be generated based on the image layout mode.

In some embodiments, establishing the connection between the first device and the second device via the live streaming configuration interface includes: presenting connection information in the live streaming configuration interface, the connection information indicating at least one connection parameter of the first device, where the connection information is configured to be obtained by the second device to establish a connection between the first device and the second device.

In some embodiments, the connection information includes a barcode such that the second device may establish a connection by scanning the barcode.

In some embodiments, the at least one connection parameter includes a network address of the first device and a connection port of the first device, where the connection port is an idle port of the first device.

In some embodiments, presenting the connection information in the live streaming configuration interface includes: displaying a target mode corresponding to multi-device live streaming in the live streaming configuration interface; and presenting the connection information in the live streaming configuration interface based on a selection of the target mode.

In some embodiments, the process 500 further includes: in response to completion of the connection establishment, displaying, in the live streaming configuration interface, an indication element indicating that the connection establishment is completed.

In some embodiments, determining the image layout mode includes: providing a plurality of candidate positions in the live streaming configuration interface, the plurality of candidate positions corresponding to different image layout modes; and determining the image layout mode based on a selection for a target position in the plurality of candidate positions.

In some embodiments, providing a plurality of candidate positions in the live streaming configuration interface includes:
determining direction information associated with the live streaming image; and providing the plurality of candidate positions corresponding to the direction information.

In some embodiments, the process 500 further includes: providing a live streaming preview image corresponding to the image layout mode, the live streaming preview image at least indicating a postion relationship between the image captured by the second device and at least one reference element in the live streaming image.

In some embodiments, the image layout mode further indicates a size of the image captured by the second device in the live streaming image.

In some embodiments, the set of live streaming images is generated based on a first video stream provided by the first device and a second video stream captured by the second device.

In some embodiments, the first video stream includes screen recording data of the first device, and the second video stream includes image data captured by a camera of the second device.

In some embodiments, causing a set of live streaming images to be generated based on the layout mode includes: obtaining the second video stream from the second device by the first device; and merging the first video and the second video based on the image layout mode by the first device to generate a set of live streaming images.

In some embodiments, the process 500 further includes sending a set of live streaming images to the remote device.

In some embodiments, obtaining the second video stream from the second device by the first device includes: receiving first state information from the second device, the first state information indicating a state of a camera of the second device; and obtaining the second video stream from the second device in response to the camera being turned on.

In some embodiments, the process 500 further includes: ceasing obtaining the second video stream from the second device in response to the camera being turned off; and sending the first video stream to a remote device as a live streaming image.

In some embodiments, the process 500 further includes: sending second state information to the second device by the first device, the second state information indicating whether the first device is in the live streaming.

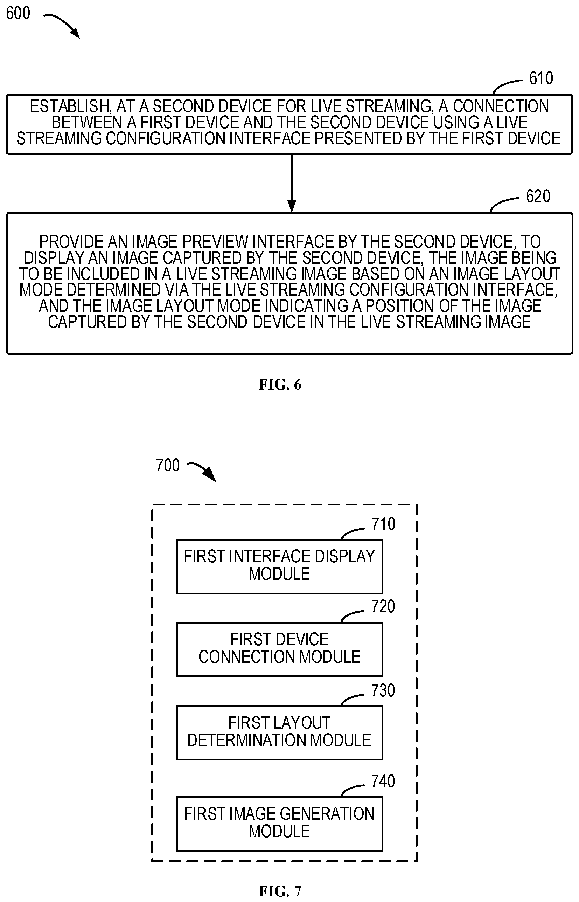

FIG. 6 illustrates a flowchart of an example live streaming process 600 according to some embodiments of the disclosure. Method 600 may be implemented by a second device (e.g., second device 120 in FIG. 1). The method 600 is described below with reference to FIG. 1.

As shown in FIG. 6, at block 610, at a second device for live streaming, a connection is established between a first device and the second device using a live streaming configuration interface presented by the first device.

At block 620, an image preview interface is provided by the second device, to display an image captured by the second device, the image being to be included in a live streaming image based on an image layout mode determined via the live streaming configuration interface, and the image layout mode indicating a position of the image captured by the second device in the live streaming image.

In some embodiments, establishing the connection between the first device and the second device includes: obtaining connection information presented in the live streaming configuration interface by the second device, to establish the connection between the first device and the second device, the connection information indicating at least one connection parameter of the first device.

In some embodiments, the image preview page further indicates a state of the connection, a state of the live streaming, and a state of a camera of the second device.

In some embodiments, the image preview interface further includes at least one control for controlling the camera of the second device.

In some embodiments, the process 600 further includes transmitting a second video stream to the first device, the second video stream including image data captured by the camera of the second device.

In some embodiments, the process 600 further includes: receiving second state information from the first device, the second state information indicating whether the first device is live streaming; and sending, in response to the first device being live streaming, a second video stream to the first device, the second video stream comprising image data captured by a camera of the second device.

In some embodiments, the process 600 further includes sending first state information to the first device, the first state information indicating the state of the camera of the second device.

### Example Apparatus and Device

FIG. 7 shows a schematic structural block diagram of an example live streaming apparatus 700 according to some embodiments of the disclosure. The apparatus 700 may be implemented or included in the first device 110. The various modules / components in the apparatus 700 may be implemented by hardware, software, firmware, or any combination thereof.

As shown, the apparatus 700 includes a first interface display module 710 configured to present a live streaming configuration interface at a first device for live streaming; a first device connection module 720 configured to establish a connection between the first device and the second device via the live streaming configuration interface; a first layout determination module 730 configured to determine a image layout mode based on input information obtained via the live streaming configuration interface, the layout mode indicating a position of an image captured by the second device in the live streaming image; and a first image generation module 740 configured to cause a set of live streaming images to be generated based on the image layout mode.

In some embodiments, establishing the connection between the first device and the second device via the live streaming configuration interface includes: presenting connection information in the live streaming configuration interface, the connection information indicating at least one connection parameter of the first device, wherein the connection information is configured to be obtained by the second device to establish the connection between the first device and the second device.

In some embodiments, the connection information includes a barcode such that the second device may establish the connection by scanning the barcode.

In some embodiments, the at least one connection parameter includes a network address of the first device and a connection port of the first device, where the connection port is an idle port of the first device.

In some embodiments, presenting the connection information in the live streaming configuration interface includes: displaying a target mode corresponding to multi-device live streaming in the live streaming configuration interface; and presenting the connection information in the live streaming configuration interface based on a selection of the target mode.

In some embodiments, the first interface display module 710 is further configured to: in response to completion of the connection establishment, display, in the live streaming configuration interface, an indication element indicating that the connection establishment is completed.

In some embodiments, the first layout determination module 730 is further configured to: provide a plurality of candidate positions in the live streaming configuration interface, the plurality of candidate positions corresponding to different image layout modes; and determine a image layout mode based on a selection for a target position in the plurality of candidate positions.

In some embodiments, the first layout determination module 730 is further configured to: determine direction information associated with the live streaming image; and provide the plurality of candidate positions corresponding to the direction information.

In some embodiments, the first layout determining module 730 is further configured to: provide a live streaming preview image corresponding to the image layout mode, the live streaming preview image at least indicates a position relationship between an image captured by the second device and at least one reference element in the live streaming image.

In some embodiments, the image layout mode further indicates a size of the image captured by the second device in the live streaming image.

In some embodiments, the set of live streaming images is generated based on a first video stream provided by the first device and a second video stream captured by the second device.

In some embodiments, the first video stream includes screen recording data of the first device, and the second video stream includes image data captured by a camera of the second device.

In some embodiments, the first image generation module 740 is further configured to: obtain the second video stream from the second device by the first device; and merge the first video and the second video based on the image layout mode to generate a set of live streaming images by the first device.

In some embodiments, the apparatus 700 further includes a sending module configured to send the set of live streaming images to the remote device.

In some embodiments, the apparatus 700 further includes a first state communication module configured to: receive first state information from the second device, the first state information indicating a state of a camera of the second device; and obtain the second video stream from the second device in response to the camera being turned on.

In some embodiments, the first state communication module is further configured to: ceasing obtaining the second video stream from the second device in response to the camera being turned off; and sending the first video stream to a remote device as a live streaming image.

In some embodiments, the apparatus 700 further includes a second state communication module configured to: send second state information to the second device by the first device, the second state information indicating whether the first device is in the live streaming.

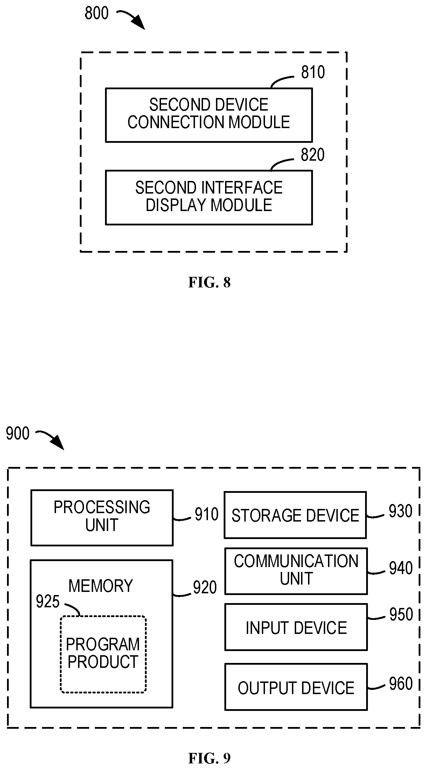

FIG. 8 shows a schematic structural block diagram of an example live streaming apparatus 800 according to some embodiments of the disclosure. The apparatus 800 may be implemented or included in the second device 120. The various modules / components in the apparatus 800 may be implemented by hardware, software, firmware, or any combination thereof.

As shown, the apparatus 800 includes a second device connection module 810 configured to establish, at a second device for live streaming, a connection between a first device and the second device using a live streaming configuration interface presented by the first device; and a second interface display module 820 configured to provide an image preview interface by the second device to display an image captured by the second device, the image being to be included in a live streaming image based on an image layout mode determined via the live streaming configuration interface, and the layout pattern indicating a position of the image captured by the second device in the livestreaming image.

In some embodiments, the second device connection module 810 is further configured to: obtain connection information presented in the live streaming configuration interface by the second device, to establish the connection between the first device and the second device, the connection information indicating at least one connection parameter of the first device.

In some embodiments, the image preview interface further indicates a state of the connection, a state of the live streaming, and a state of a camera of the second device.

In some embodiments, the image preview interface further includes at least one control for controlling the camera of the second device.

In some embodiments, the apparatus 800 further includes a first sending module configured to send a second video stream to the first device, the second video stream includes image data captured by the camera of the second device.

In some embodiments, the first sending module is further configured to: receive second state information from the first device, the second state information indicating whether the first device is in the live streaming; and in response to the first device being in the live streaming, send the second video stream to the first device.

In some embodiments, the apparatus 800 further includes a second sending module configured to send first state information to the first device, the first state information indicating the state of the camera of the second device.

FIG. 9 illustrates a block diagram of an electronic device 900 in which one or more embodiments of the disclosure may be implemented. It is to be understood that the electronic device 900 illustrated in FIG. 9 is merely illustrative and should not constitute any limitation on the functionality and scope of the embodiments described herein.

As shown in FIG. 9, the electronic device 900 is in the form of a general-purpose electronic device. Components of the electronic device 900 may include, but are not limited to, one or more processors or processing units 910, a memory 920, a storage device 930, one or more communication units 940, one or more input devices 950, and one or more output devices 960. The processing unit 910 may be an actual or virtual processor and capable of performing various processes according to programs stored in the memory 920. In a multiprocessor system, a plurality of processors execute computer-executable instructions in parallel to improve the parallel processing capability of the electronic device 900.

The electronic device 900 generally includes a plurality of computer storage media. Such media may be any available media accessible to the electronic device 900, including, but not limited to, volatile and non-volatile media, removable and non-removable media. The memory 920 may be a volatile memory (e.g., a register, a cache, a random access memory (RAM)), a non-volatile memory (e.g., a read-only memory (ROM), electrically erasable programmable read-only memory (EEPROM), a flash memory), or some combination thereof. The storage device 930 may be a removable or non-removable medium and may include a machine-readable medium, such as a flash drive, magnetic disk, or any other medium, which may be capable of storing information and / or data and may be accessed within the electronic device 900.

The electronic device 900 may further include additional removable / non-removable, volatile / non-volatile storage media/medium. Although not shown in FIG. 9, a disk drive for reading from or writing into a removable, nonvolatile magnetic disk (e.g., a "floppy disk") and an optical disk drive for reading from or writing into a removable, nonvolatile optical disk may be provided. In these cases, each drive may be connected to a bus (not shown) by one or more data media interfaces. The memory 920 may include a computer program product 925 having one or more program modules configured to perform various methods or actions of various embodiments of the disclosure.

The communication unit 940 implements communication with other electronic device through a communication medium. Additionally, the functionality of components of the electronic device 900 may be implemented in a single computing cluster or multiple computing machines capable of communicating over a communication connection. Thus, the electronic device 900 may operate in a networked environment using logical connections with one or more other servers, network personal computers (PCs), or another network node.

The input device 950 may be one or more input devices, such as a mouse, a keyboard, a trackball, or the like. The output device 960 may be one or more output devices, such as a display, a speaker, a printer, or the like. The electronic device 900 may also communicate with one or more external devices (not shown) through the communication unit 940 as needed, the external device such as a storage device, a display device, etc., communicates with one or more devices that enable a user to interact with the electronic device 900, or communicates with any device (e.g., a network card, a modem, etc.) that enables the electronic device 900 to communicate with one or more other electronic devices. Such communication may be performed via an input / output (I / O) interface (not shown).

According to example implementations of the disclosure, there is provided a computer-readable storage medium having computer-executable instructions stored thereon, and the computer-executable instructions are executed by a processor to implement the method described above. According to example implementations of the disclosure, a computer program product is further provided, the computer program product being tangibly stored on a non-transitory computer-readable medium and including computer-executable instructions, the computer-executable instructions being executed by a processor to implement the method described above.

Aspects of the disclosure are described herein with reference to flowcharts and / or block diagrams of a method, an apparatus, a device, and a computer program product implemented in accordance with the disclosure. It is to be understood that each block of the flowchart and / or block diagram, and combination(s) of blocks in the flowchart(s) and / or block diagram(s), may be implemented by computer readable program instructions.

These computer-readable program instructions may be provided to a processing unit of a general purpose computer, special purpose computer, or other programmable data processing apparatus to produce a machine, such that the instructions, when executed by a processing unit of the computer or other programmable data processing apparatus, produce means to implement the functions / acts specified in one or more blocks in the flowchart(s) and / or block diagram(s). These computer-readable program instructions may also be stored in a computer-readable storage medium, and cause the computer, programmable data processing apparatus, and / or other devices to work in a particular manner, such that the computer-readable medium storing instructions includes an article of manufacture including instructions to implement aspects of the functions / acts specified in one or more blocks in the flowchart(s) and / or block diagram(s).

The computer-readable program instructions may be loaded onto the computer, other programmable data processing apparatus, or other apparatus, such that a series of operational steps are performed on the computer, other programmable data processing apparatus, or other apparatus to produce a computer-implemented process, such that the instructions executed on the computer, other programmable data processing apparatus, or other apparatus implement the functions / acts specified in one or more blocks in the flowchart(s) and / or block diagram(s).

The flowchart and block diagrams in the figures show architecture, functionality, and operation that may be possibly implemented by system(s), method(s), and computer program product(s) according to various implementations of the disclosure. In this regard, each block in the flowchart or block diagram may represent a module, program segment, or part of an instruction that includes one or more executable instructions for implementing the specified logical function. In some alternative implementations, the functions noted in the block(s) may also occur in a different order than noted in the figures. For example, two consecutive blocks may actually be performed substantially in parallel, which may sometimes be performed in the reverse order, depending on the functionality involved. It is also noted that each block in the block diagram and / or flowchart, as well as combination(s) of blocks in the block diagram(s) and / or flowchart(s), may be implemented with a dedicated hardware-based system that performs the specified functions or actions, or may be implemented in a combination of dedicated hardware and computer instructions.

Various implementations of the disclosure have been described above, which are illustrative, not exhaustive, and are not limited to the implementations disclosed. Many modifications and variations will be apparent to those of ordinary skill in the art without departing from the scope of the various implementations illustrated. The selection of the terms used herein is intended to best explain the principles of the implementations, practical applications, or improvements to techniques in the marketplace, or to enable others of ordinary skill in the art to understand the various implementations disclosed herein.

## Claims

1. A method for live streaming, comprising:
presenting a live streaming configuration interface at a first device for live streaming;
establishing a connection between the first device and a second device via the live streaming configuration interface;
determining an image layout mode based on input information obtained via the live streaming configuration interface, the layout mode indicating a position of an image captured by the second device in a live streaming image; and
causing a set of live streaming images to be generated based on the image layout mode.

2. The method of claim 1, wherein establishing the connection between the first device and the second device via the live streaming configuration interface comprises:
presenting connection information in the live streaming configuration interface, the connection information indicating at least one connection parameter of the first device, wherein the connection information is configured to be obtained by the second device to establish the connection between the first device and the second device.

3. The method of claim 2, wherein the at least one connection parameter comprises: a network address of the first device and a connection port of the first device, wherein the connection port is an idle port of the first device.

4. The method of claim 2, wherein presenting the connection information in the live streaming configuration interface comprises:
displaying a target mode corresponding to multi-device live streaming in the live streaming configuration interface; and
presenting the connection information in the live streaming configuration interface based on a selection of the target mode.

5. The method of claim 1, wherein determining an image layout mode comprises:
providing a plurality of candidate positions in the live streaming configuration interface, the plurality of candidate positions corresponding to different image layout modes; and
determining the image layout mode based on a selection for a target position in the plurality of candidate positions.

6. The method of claim 5, wherein providing a plurality of candidate positions in the live streaming configuration interface comprises:
determining direction information associated with the live streaming image; and
providing the plurality of candidate positions corresponding to the direction information.

7. The method of claim 1, further comprising:
providing a live streaming preview image corresponding to the image layout mode, the live streaming preview image at least indicating a position relationship between the image captured by the second device and at least one reference element in the live streaming image.

8. The method of claim 1, wherein the image layout mode further indicates a size of the image captured by the second device in the live streaming image.

9. The method of claim 1, wherein the set of live streaming images is generated based on a first video stream provided by the first device and a second video stream captured by the second device, wherein the first video stream comprises screen recording data of the first device, and the second video stream comprises image data captured by a camera of the second device.

10. The method of claim 9, wherein causing a set of live streaming images to be generated based on the layout mode comprises:
obtaining the second video stream from the second device by the first device; and
merging the first video stream and the second video stream based on the image layout mode by the first device to generate the set of live streaming images.

11. The method of claim 10, wherein obtaining the second video stream from the second device by the first device comprises:
receiving first state information from the second device, the first state information indicating a state of a camera of the second device; and
obtaining the second video stream from the second device in response to the camera being turned on.

12. The method of claim 11, further comprising:
ceasing obtaining the second video stream from the second device in response to the camera being turned off; and
sending the first video stream to a remote device as a live streaming image.

13. A method for live streaming, comprising:
establishing, at a second device for live streaming, a connection between a first device and the second device using a live streaming configuration interface presented by the first device; and
providing an image preview interface by the second device, to display an image captured by the second device, the image being to be included in a live streaming image based on an image layout mode determined via the live streaming configuration interface, and the image layout mode indicating a position of the image captured by the second device in the live streaming image.

14. The method of claim 13, wherein establishing the connection between the first device and the second device comprises:
obtaining connection information presented in the live streaming configuration interface by the second device, to establish the connection between the first device and the second device, the connection information indicating at least one connection parameter of the first device.

15. The method of claim 13, wherein the image preview interface further indicates:
a state of the connection,
a state of the live streaming, and
a state of a camera of the second device.

16. The method of claim 13, further comprising:
receiving second state information from the first device, the second state information indicating whether the first device is live streaming; and
sending, in response to the first device being live streaming, a second video stream to the first device, the second video stream comprising image data captured by a camera of the second device.

17. An apparatus for live streaming, comprising:
a first interface display module configured to present a live streaming configuration interface at a first device for live streaming;
a first device connection module configured to establish a connection between the first device and a second device via the live streaming configuration interface;
a first layout determination module configured to determine an image layout mode based on input information obtained via the live streaming configuration interface, the layout mode indicating a position of an image captured by the second device in a live streaming image; and
a first image generation module configured to cause a set of live streaming images to be generated based on the image layout mode.

18. An apparatus for live streaming, comprising:
a second device connection module configured to establish a connection between the first device and the second device at a second device for live streaming by using a live streaming configuration interface presented by a first device; and
a second interface display module configured to provide an image preview interface by the second device to display an image captured by the second device, the image being to be included in a live streaming image based on an image layout mode determined via the live streaming configuration interface, and the layout pattern indicating a position of the image captured by the second device in the livestreaming image.

19. An electronic device, comprising:
a memory and a processor;
the memory configured to store one or more computer instructions, and the one or more computer instructions executed by the processor to implement the method according to any one of claims 1-12 or 13-16.

20. A computer-readable storage medium having stored thereon a computer program executable by a processor to implement the method of claim according to any one of claims 1-12 or 13-16.
